# EUROPÄISCHE PATENTSCHRIFT

(11) **EP 1 468 976 B1**
(45) Veröffentlichungstag und Bekanntmachung des Hinweises auf die Patenterteilung: **09.05.2007**
(21) Anmeldenummer: 04450057.7
(22) Anmeldetag: 11.03.2004
(51) Int. Cl.: C04B 35/52, C04B 35/80, C04B 35/83

(54) **Verfahren zur Herstellung von Schutzüberzügen auf kohlenstoffhaltigen Substraten**
Process for preparation of protective coatings on carbon-containing substrates.
Procédé pour la préparation d'une couche de protection sur un substrat contenant du carbon

(30) Priorität: 11.03.2003 AT 3742003
(43) Veröffentlichungstag der Anmeldung: 20.10.2004
(73) Patentinhaber: ARC Seibersdorf Research GmbH, 1010 Wien (AT)
(72) Erfinder: Liedtke, Volker, Dr., 1100 Wien (AT); Haruvy, Yair, Dr., Rehovot, 76360 (IL)
(74) Vertreter: Wildhack, Helmut

(56) Entgegenhaltungen:
- EP-A- 0 482 782
- DE-C- 19 503 976
- FR-A- 1 362 502
- US-A- 3 455 723
- US-A- 4 560 589
- US-A- 5 272 240
- US-A- 5 357 015
- US-A- 6 077 607

## Beschreibung

### Grundlage der Erfindung:

Die Erfindung betrifft gegen oxidativen thermischen Abbau resistente Schutzüberzüge und im Speziellen keramische bzw. keramik-basierte Überzüge. Es ist ein breites Spektrum verschiedener keramischer Überzüge bekannt geworden, welche sich sowohl in ihren Zusammensetzungen als auch in der Art und Weise ihrer Herstellung oft beträchtlich voneinander unterscheiden. Typische bekannte Herstellungsverfahren umfassen die Aufbringung eines Keramikpulvers auf einen mit dem gewünschten Überzug zu versehenden Gegenstand, was vorzugsweise in Gegenwart eines Adhäsivs oder eines Lösungsmittels erfolgt, wonach der dann getrocknete Pulverüberzug bei höheren Temperaturen aufgesintert wird. Es ist weiters bekannt, zur Herstellung von Nano-Komposit-Überzügen mit jeweils gewünschten Eigenschaften Nano-Pulver von verschiedenen Keramikmaterialien und/oder Verstärkungs- bzw. Armierungskomponenten zum Einsatz zu bringen.

Das industriell am häufigsten verwendete Verfahren zur Beschichtung von Werkstücken ist das CVD (chemical vapor deposition)-Verfahren.

An keramische Überzüge im Allgemeinen und an Siliciumcarbid-Überzüge im Speziellen, welche für den Schutz von hohen Temperaturen ausgesetzten Gegenständen vorgesehen sind, werden hohe Anforderung bezüglich Hochtemperatur-Beständigkeit unter hoch-oxidierenden Bedingungen gestellt. Solche Schutzüberzüge sind insbesondere für Gegenstände vorgesehen, welche Kohlenstoff oder Graphit als wesentliche Komponente oder als Armierungsmaterial enthalten, da die angesprochene Oxidation des Kohlenstoffs die Eigenschaften der unter dessen Einsatz gefertigten Gegenstände in hohem Ausmaß verschlechtert und damit für den jeweils geplanten Einsatz unbrauchbar macht. Der besondere Vorteil von siliciumcarbid-basierten Schutzüberzügen liegt in ihrer Beständigkeit gegenüber dem Kohlenstoff im Substrat einerseits und anderseits in ihrer Fähigkeit, eine Art äußere SiO₂-Glasschicht zu bilden, welche den damit beschichteten Gegenstand vor weiterer Oxidation schützt. Diese Fähigkeit kann auch als Selbst-Heilungsmechanismus für mechanisch beschädigte Flächen bzw. Bereiche in der genannten Glas-Schutzschicht herangezogen werden.

### Beschreibung des relevanten Standes der Technik:

Sol/Gel-basierte Schutzüberzüge für Gegenstände aus Kohlenstoff sind beispielsweise aus der EP 482782 B1 bekannt. Der dort beschriebene komplexe Prozess umfasst eine zumindest eine Stunde bis einige Stunden dauernde, "langsame" Sol/Gel-Reaktion, bevorzugt in einer hochverdünnten Alkoxisilan-Lösung in Wasser und Aceton, wobei ein kohlenstoffhaltiges bzw. organisches Verdickungsmittel und weiters Füllstoffe aus verschiedenen Typen von Gläsern Einsatz finden.

Der Haupt-Schwachpunkt der Überzüge gemäß diesem Stand der Technik besteht in dem bei der Herstellung der Überzüge nicht vermeidbaren Abbau von SiO₂ in der Überzugsschicht, welche mit dem von ihr zu schützenden Kohlenstoff des Gegenstandes bzw. Substrats in Kontakt steht, wobei bei der Hitzeeinwirkung zur Bildung des Siliciumcarbids gasförmiges SiO und CO entstehen, wozu auf die Spalte 4, Zeile 37 der EP-B1 hinzuweisen ist. Dies macht es notwendig, dass mehrere Schichten des Sol/Gels, zusammen mit organischen Verdickungsmitteln und anderen Additiven aufgebracht werden müssen, um die Bildung eines kohärenten Belages mit einer ausreichenden Menge an Siliciumcarbid zu gewährleisten. Dennoch kommt es bei der Bildung des Sol/Gel-Harzes auf Silan-Basis gemäß dieser EP-B1 zur Ausbildung von SiO₂ in geringen Mengen, was den Überzug für einen Abbau infolge der Bildung von gasförmigem SiO und CO anfällig macht.

Es wurde gefunden, dass ein wesentlicher Grund für die Hemmnisse bei der Erreichung tatsächlich guter Material- bzw. Überzugs-Eigenschaften beim Verfahren gemäß der EP B1 ganz besonders in der Einstellung des Mol-Verhältnisses von Wasser zum jeweils eingesetzten Silan liegt. Gemäß dieser EP-B1 muss dieses Verhältnis hoch gehalten werden, und zwar in einem Bereich von 3,3 bis 20, und dies erfordert die Zugabe eines organischen Lösungsmittels. Dies führt zu einem relativ hoch verdünntem Harz, was dann die Verwendung von organischen Verdickungsmitteln notwendig macht, um eine ordnungsgemäße Aufbringung als Überzug auf ein Substrat zu ermöglichen.

Prasse et al. [4] beschreiben eine Methode zur Infiltration von Tetraethoxysilan-Lösungen in Kohlenstoff-Formen, mit dem Ziel, dieselben mit einem SiO₂-Überzug zu versehen und dann das SiO₂ in SiC umzuwandeln, und zwar mittels der Reaktion des Siliciums mit dem Kohlenstoff. Diese Methode krankt aber, wie die Autoren selbst zugeben, daran, dass die Formgenauigkeit der Gussform in Folge des Einsatzes des Kohlenstoffs, aus dem dieselbe gebildet ist, für die Bildung des Siliciumcarbids im Überzug negativ beeinflusst wird.

Ähnliches lehren auch Villegas et al. [5], welche ebenfalls einen oxidischen Schutzüberzug beschreiben, der eine Mischung von Silicium- und Boroxid umfasst. Die Nachteile dieses Überzugs, der zuerst auf Glasscheiben getestet wurde, sind ähnlich jenen der Überzüge gemäß der vorher genannten Literaturstelle [4].

Aparicio et al [6] berichten von der Infiltration von Sol/Gel-Lösungen von Silicium-Verbindungen in C/SiC-Verbundkörpern, ebenfalls mit dem Ziel, dieselben vor Oxidation zu schützen. Eine Grenze, an welche bekannte SiO₂-Schutzüberzüge immer wieder stoßen, rührt von der Tendenz zur Rissbildung her, welche auf die thermische Ausdehnung des C/SiC-Materials zurückzuführen ist, das durch die Überzüge geschützt werden soll.

Takamura et al. [7] lehren eine Methode der Sol/Gel-Herstellung von Siliciumoxicarbid-Filmen aus Methyl- und Vinyltrimethoxisilan-Precursern. Die auf diese Weise hergestellten Überzugsfilme haben zwar die Eigenschaft, riss- und deformationsfrei zu sein bzw. zu bleiben, enthalten aber 58 bis 90 Mol-% Rest-Kohlenstoff. Dieser hohe Anteil an Kohlenstoff führt bei Einwirkung hoher Temperaturen in oxidativer Umgebung zur Oxidation, und das große Volumen der Gase, die dabei gebildet werden, führt zu einem drastischen Abbau der Überzugsfilme und damit zur eklatanten Verminderung von deren Schutzfunktionen.

Es bestand somit ein dringender Bedarf an einem einfachen Herstellungs-Verfahren, welches mit möglichst hoher Sicherheit und ohne Schädigung des zu schützenden Substratmaterials zu kohärenten C/SiC-Überzügen mit - wenn möglich - maßgeschneiderten Eigenschaften, wie z.B. mit einem gewünschten bzw. vorgegebenen thermischen Ausdehnungskoeffizienten und - bei wettbewerbsfähig bleibenden Kosten - zu zumindest vergleichbaren oder besseren Gebrauchs- und Gebrauchsdauer-Eigenschaften der erhaltenen Produkte führt.

### Beschreibung der Erfindung:

Die der vorliegenden Erfindung zugrundeliegende Technik stammt - allgemein betrachtet - aus dem an sich sehr weiten Gebiet der Sol/Gel-Prozesse und deren Anwendung, und im Speziellen aus jener Technologie, welche zu organisch modifizierten Keramikmaterialien führt. Sie beruht auf einem "schnellen" Sol/Gel-Prozess [1, 9, 10], ist jedoch nicht ausschließlich darauf begrenzt. Im Prinzip kann man mit einem Sol/Gel-Prozess, beispielsweise ausgehend von einer Mischung von Alkyl-Alkoxysilan-Monomeren, Harze mit einem "Si-O-Si-Rückgrat" auf chemischem Wege produzieren, welche organisch modifiziert sind und jeweils auf ein gegebenes Problem abstimmbare Zusammensetzung und Viskosität aufweisen.

Die folgende Formel veranschaulicht dies, wenn auch sehr vereinfacht: 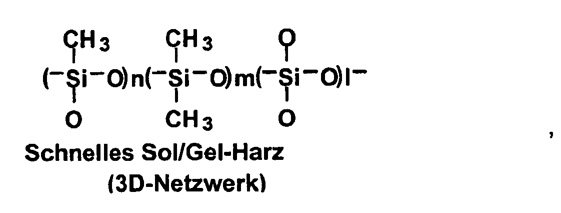 worin (n+2m)/(n+m+1) > 0.7

Dem Sol/Gel-Prozess liegt eine chemische Reaktion von (Halb-)Metallalkoxid-Monomeren, und im Speziellen z.B. von Alkoxy-Alkylsilanen, mit Wasser zugrunde, welche durch eine Säure oder Base katalysiert wird. Dieser Prozess umfasst mehrere Hydrolyse- und Polymerisations-Stufen bzw. -Zustände und führt zu einer porösen, keramikartigen Matrix mit einem weiten Spektrum an Eigenschaften, je nachdem, welche Monomere eingesetzt wurden, welche Art von Sol/Gel-Prozess zur Anwendung kommt und wie die Schritte zur Verfestigung des Gels ausgesehen haben [8].

Der z.B. aus [1, 9] bekannt gewordene schnelle Sol/Gel-Prozess "fast sol gel process" basiert auf einer raschen Hydrolyse und Polymerisation einer Mischung von (Me)_{X}Si(O-Me)₄₋ₓ-Monomeren mit annähernd stöchiometrischen Mengen an Wasser. Das besondere Merkmal dieser Methode besteht darin, dass kein Lösungsmittel oder überschüssiges Wasser für die Solvatisierung zugegeben werden muss.

Typische Katalysatoren für die Reaktion sind übliche Säuren, z.B. Salzsäure, oder übliche Basen, wie z.B. Ammoniak, innerhalb eines weiten Konzentrations-Bereiches. Sie ermöglichen die Herstellung von glasartigen Materialien auf Basis eines Siloxan-Gerüstes innerhalb von Minuten, welche die Umsetzung selbst benötigt, und innerhalb weniger Stunden für das Aushärten bei Temperaturen im Bereich von 65 bis 140°C. Diese glasartigen Materialien lassen sich jeweils gezielt auf spezifische Gegenstände, Monolithe, Verbundstoffe, Überzugsschichten und mikro-optische Elemente hin veränderlich gestalten und sozusagen maßschneidern. Daraus hergestellte Überzüge haften sofort und fest an den meisten Oberflächen an und bilden mit deren Oxidgruppen chemische Bindungen [10].

Es kommt bei Einsatz der im Folgenden genannten Basis-Ausgangsmaterialien zu folgender grundsätzlicher "schneller" Sol/Gel-Harzbildung:

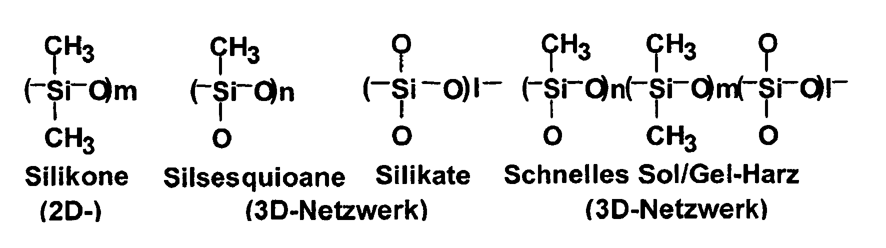

Aufgrund der chemischen Konstitution und der dreidimensionalen Struktur ist diese soeben formelmäßig charakterisierte Familie von Umsetzungsprodukten bzw. Materialien äußerst beständig gegenüber oxidativem Abbau, und zwar bei deren Anwendung sowohl auf der Erde als auch im Weltraum [11, 12]. Im Speziellen sind Verbundstoffe unter Einsatz dieser Harze als Beschichtungsmaterial für Strukturelemente, welche bei hohen Temperaturen in hoch-oxidativer Umgebung eingesetzt werden sollen, besonders geeignet.

Es wurde unlängst gezeigt [13], dass eine Katalyse mit Flusssäure bei der schnellen Sol/Gel-Reaktion unter Anwendung von Konzentrationen zwischen 1 und 20 Mol/l zu Sol/Gel-basierten Keramiken führt, welche hohe mechanische Widerstandsfähigkeit und daher geringe Bereitschaft zu Belastungsbrüchen aufweisen. Diese Widerstandsfähigkeit ist einem teilweisen Ersatz der Si-O-Si-Brücken in der Matrix durch Si-F-Endgruppen zuzuschreiben, was zu einer erhöhten Mobilität der Gruppen und zur "Heilung" von Bindungen durch Si-F- zu Si-O-Bindungs-Austausch und zu Relaxationseffekten führt.

Die vorliegende Erfindung macht sich einen wie beschriebenen "schnellen" Sol/Gel-Prozess auf Basis von Silanen zu Nutze, und ihr Ziel liegt darin, einen solchen Prozess für die Beschichtung eines - bisher nur mit wenig befriedigendem Erfolg mit einem gegen oxidativen Abbau bei höheren Temperaturen resistenten Überzug zu versehendes-Substrates einzusetzen.

Unter einem wie oben angeführten "schnellen" Sol/Gel-Prozess ist ein Harzbildungsprozess zu verstehen, dessen Dauer vom Beginn der Reaktion der SilanMonomere mit dem Wasser bis zum Auftragen des Harzes auf das Substrat maximal 1 h beträgt. Dies gilt für einen derartigen Sol/Gel-Prozess, welcher nicht durch Zugabe einer Lewis-Base, wie z.B. THF od.dgl., oder auf andere Weise, wie z.B. durch Kühlung, angehalten bzw. verzögert wird.

Gegenstand der vorliegenden Erfindung ist somit ein neues Verfahren zur Herstellung einer Beschichtung auf Basis von Silicium(oxi)carbid auf einem Substrat, insbesondere aus der Gruppe Kohlenstoff, Kohlenstoff-Kohlenstoff-Verbundmaterialien und Kohlenstoff-Siliciumcarbid-Verbundmaterialien, wobei eine Lösung von mindestens einem organische Gruppen aufweisenden Silan und Wasser in Gegenwart eines sauren oder basischen Katalysators der Hydrolyse und Polykondensation unterworfen wird und nach zumindest teilweiser Entfernung der dabei frei werdenden, flüchtigen Verbindungen, insbesondere Alkohol(e) oder Phenole, das erhaltene Sol und/oder Gel, gegebenenfalls in mehreren Schichten, auf das Substrat aufgebracht wird und nach einer Trocknung das erhaltene, mit der Beschichtung versehene Substrat, gegebenenfalls mehrstufig, bis auf Temperaturen von über 1300°C erhitzt wird.

Das Verfahren ist dadurch gekennzeichnet, dass - für den Erhalt einer gegen oxidativen Abbau resistenten SiC-Keramik-Beschichtung - ein (Alkyl- und/oder Aryl-)Alkoxysilan-Monomer oder aber ein Gemisch von mindestens zwei (Alkyl- und/oder Aryl-)Alkoxysilan-Monomeren, stöchiometrisch insgesamt entsprechend der allgemeinen Formel

RₓSi(OR')₄₋ₓ , (I)

worin
- R und R': unabhängig voneinander Alkyl mit 1 bis 5, vorzugsweise 1 bis 3 Kohlenstoffatomen und/oder Aryl, insbesondere Phenyl, und
- x: eine beliebige Zahl von 1,0 bis 4,0
bedeuten, unter Ausschluss eines Zusatzes auf Basis eines kohlenstoffhältigen Materials, mit Wasser in einem Wasser-zu-Silan-Molverhältnis von 0,3 bis 3,0, vorzugsweise von 0,6 bis 1,8, zu dem jeweils entsprechenden flüssigen bzw. fließfähigen Sol-Harz umgesetzt wird, und dass die nach teilweisem Entfernen flüchtiger Komponenten aus demselben, Auftragen desselben auf das Substrat und Trocknen erhaltene, im wesentlichen glasartige Auftragsschicht durch Erhitzen auf Temperaturen von bis zu 1850°C, vorzugsweise bis maximal 1600°C in die erwünschte keramikartige SiC-Beschichtung übergeführt bzw. umgewandelt wird.

Die erfindungsgemäß zum Einsatz kommenden, in einem "schnellen" Sol/Gel-Prozess hergestellten, Harze enthalten im Durchschnitt mindestens 0,7 und gemäß einer - dem Anspruch 2 zu entnehmenden - bevorzugten Ausführungsform 0,7 bis 1,2 organische Gruppen pro Silan-Monomereinheit. Die genannten Harze bilden nach ihrem Auftrag auf dem mit dem neuen Schutzüberzug zu versehenden Gegenstand einen "grünen" Sol/Gel-Überzug, welcher ausgezeichnet haftet und sich nach dem Trocknen innerhalb weniger Stunden bei erhöhten Temperaturen verfestigt. Es werden dabei weder Additive noch organische Verdickungsmittel für den Sol/Gel(-Umwandlungs)Prozess benötigt. An dieser Stelle sei angemerkt, dass dieser neue Sol/Gel-Prozess ohne Zugabe von kohlenstoffhaltigen Materialien, wie sie aus dem Stand als Verdickungsmittel für die Herstellung von SiC-Überzügen bekannt sind, erfolgt, und dass er bezüglich Zusammensetzung, Reaktions-Prozess bzw. -Verlauf und Aushärtungs-Bedingungen wenig empfindlich ist, und dies ganz im Gegensatz zu einem prinzipiell ähnlichen, bekannten Prozess, dessen Ziel die Herstellung optischer Elemente ist [1].

Der oben genannte "grüne" Überzug wird erfindungsgemäß bevorzugterweise mittels eines mit stufenweisen Temperaturerhöhungen verlaufenden thermischen Prozesses in inerter Atmosphäre bei Temperaturen bis zu 1850°C in einen Silicium(oxi)carbid-Überzug umgewandelt.

Bei diesem Prozess unterliegen die organischen Substituenten an den Silicium-Atomen einer oxidativen Pyrolyse gemäß der folgenden - hier nur schematisch dargestellten - Reaktion:

(SiRO_{3/2})ₙ → SiC + CO₂ + H₂O

Die Zusammensetzung des erfindungsgemäß erhältlichen Silicium(oxi)carbides ist selbst maßschneiderbar, indem die Zusammensetzung der Sol/Gel-Reaktanten jeweils genau auf eine Zieleigenschaft zugeschnitten sind.

Es können auch andere Elemente als Silicium, nämlich z.B. Titan oder Bor, in die Sol/Gel-Matrix eingebaut werden, und zwar durch Zugabe von dieselben enthaltenden Precursern auf Organo-Metall-Basis in die zum Einsatz gelangenden Silane. Letztlich wird bei der Einwirkung der hohen Temperaturen und in der oxidativen Umgebung der Überzug durch sich selbst geschützt und zwar durch die inhärente Bildung einer äußeren bzw. äußersten SiO₂-Überzugsschicht.

Es hat sich gezeigt, dass besonders resistente Silicium(oxi)carbid-Überzüge auf Kohlenstoff-Substraten erzielbar sind, wenn - wie gemäß **Anspruch** 3 vorgesehen, ein - wie oben erwähnten - "schneller" Sol/Gel-Prozess zum Einsatz kommt.

Was die Möglichkeiten der Modifikation der Eigenschaften der neuen Überzüge auf den speziellen kohlenstoff-basierten Substraten betrifft, können diese, gleich beginnend mit dem Auftragen des Sol/Gel-Harzes, mit dessen Eigenschaften im "grünen" Zustand, beim Trocknen und letzten Endes bei der Hoch-Temperaturbehandlung und beim fertigen Überzug dadurch erweitert werden, dass, siehe dazu im Einzelnen den **Anspruch** 4, hydrolysefähige metall- bzw. halbmetall-organische Verbindungen der verschiedensten Art zugesetzt werden.

Bezüglich der Form bzw. des Zustandes, in welcher bzw. in welchem die Sol/Gel-Harze bevorzugterweise zum Einsatz kommen, gibt der **Anspruch** 5 näher Auskunft.

Um optimale Bedingungen für die Aufbringung der Harze für die Bildung des "grünen" Überzugs auf dem zu beschichtenden Substrat zu schaffen, kann der Zusatz von, z.B. die Hydrolysereaktion kurzzeitig stoppenden, Substanzen, wie z.B. Tetrahydrofuran, oder von viskositäts-verändernden Lösungsmitteln günstig sein, wie dies aus dem **Anspruch** 6 hervorgeht.

Dem **Anspruch** 7 sind einige bevorzugte Methoden für das Aufbringen der Sol/Gel-Harze auf das Substrat zu entnehmen.

Bezüglich besonders günstiger Bedingungen beim Trocknen der auf das Substrat aufgetragenen "grünen" Überzüge sei auf den **Anspruch** 8 verwiesen.

Der **Anspruch** 9 enthält Angaben bezüglich der für die schonende Pyrolyse des getrockneten Harz-Überzugs günstigsten Bedingungen.

Dem **Anspruch** 10 sind die für die Durchführung der Härtung und Pyrolyse des Harz-Auftrags günstigsten Methoden der Erhitzung des mit dem Überzug versehenen Substrates zu entnehmen.

Was die für die Final-Eigenschaften der neuen Überzüge wichtige Verfahrensstufe der Erhitzung bzw. des "Brennens" der Überzüge betrifft, so gibt darüber der **Anspruch** 11 näher Auskunft.

Gemäß **Anspruch** 12 kann der Final-Erhitzungsprozess zusätzlich durch Überdruck-Bedingungen unterstützt werden.

Es kann aber - siehe dazu den **Anspruch** 13 - für bestimmte Aufgaben günstig sein, bei Drücken unterhalb des Umgebungsdruckes zu arbeiten, wie z.B. dann, wenn eine Rest-Entgasung od.dgl. erwünscht ist.

Nicht zuletzt besteht ein weiterer wesentlicher Gegenstand der Erfindung in der neuartigen Verwendung der Silane bzw. Silan-Harze der oben genannten allgemeinen Formel (I) für die Herstellung der neuen, gegen oxidativen Abbau resistenten Überzüge bzw. Beschichtungen auf Kohlenstoff- bzw. Silicium/Kohlenstoff-basierten Substraten gemäß dem **Anspruch** 16.

Schließlich kommen für die neue Verwendung die im **Anspruch** 17 implizit angeführten Ausführungs-Varianten in Frage.

Anhand der folgenden Beispiele wird die Erfindung näher erläutert:

### Beispiele:

### Allgemeine Beschreibung der Herstellung der Harze:

Die für die Herstellung der für die Beschichtung von C-Substraten vorgesehenen Harze benötigten Chemikalien und Methoden für die Bereitung von "schnellen" Sol/Gel basierten Harzen sind als solche an verschiedenen Stellen schon beschrieben worden [1,4,5]. Eine typische Methode umfasst das Mischen von Methyltrimethoxisilan (MTMS) mit geringen Mengen Dimethyldimethoxisilan (DMDMS) und/oder Tetramethyl-Orthosilikat (TMOS); rasche Zugabe von wässeriger HCI (5.10⁻³ M) oder HF (1-5 M) und zwar so eingestellt, dass 0,5 Mol Wasser pro Mol Silan-Alkoxid(od.dgl.)-Gruppe zugegeben werden. Dann wird 10 min lang bei 100°C in einem verschlossenen Reaktionskolben gerührt, wonach ein allmähliches Öffnen des Kolbens während einer Zeitdauer von etwa 10 min erfolgt und das Methanol in einem Ausmaß von etwa 50 %, bezogen auf das ursprüngliche Gewicht der Ausgangsmischung, abgedampft wird, und wonach schließlich das Gießen des Films bzw. dessen Aufbringung auf ein jeweils zu beschichtendes Substrat erfolgt. Die Aushärtung erfolgt dann innerhalb von 1 bis 2 Tagen bei 65-70°C.

Mit anderen (Halb-)Metallen modifizierte Harze können durch Zugabe eines Precursers dieser Metalle, wie z.B. Titaniumalkoxid oder Borsäure(-Anhydrid), in jeweils gewünschtem Prozentsatz zu der Mischung der Silane der Formel I modifiziert werden. Die Sol/Gel-Reaktion erfolgt genauso wie soeben beschrieben, nur mit dem Unterschied, dass das molare Verhältnis des einzusetzenden Wassers gesenkt wird, um eine zu frühe Bildung eines Gels aus dem Sols zu vermeiden.

### Herstellung der SiC-Überzüge:

HCI- und HF-katalysierte Sol/Gel-Harze werden auf handelsübliche Kohlenstoff- und C/SiC-Streifen mit den Maßen 5x10x50 mm aufgebracht, indem diese Streifen für verschieden lange Zeitdauer in das kochende Sol getaucht werden, wobei das Gel in verschiedenen Verdünnungen, beispielsweise mit Tetrahydrofuran (THF), vorliegt. Die Aushärtung erfolgt bei Umgebungs-Temperatur über mehrere Tage oder bei 70°C innerhalb eines Tages.

Die mechanischen und thermischen Eigenschaften der Überzüge lassen sich gemäß den ARCS-Testmethoden, welche in [10] beschrieben sind, bestimmen.

### Beispiel 1:

### MTMS-basierter Siliciumoxicarbid-Überzug:

40 g Methyltrimethoxysilan (MTMS, Aldrich, CP) wurden in einem Kolben mit Magnetrührstäbchen und Schraubkappe eingebracht, und es wurden 8 g Salzsäure 0,01 M zugegeben. Dabei wurden keinerlei Lösungs- oder Verdünnungsmittel eingesetzt. Der Kolben wurde nur leicht verschlossen und in ein Wasserbad mit 100°C gestellt, wobei 10 min lang gerührt wurde. Nach 10 min wurde die Verschlusskappe nach und nach geöffnet und zwar ebenfalls wieder innerhalb von 10 min, um ein allmähliches Abdestillieren bzw. Abdampfen des bei der Hydrolyse- und Kondensations-Reaktion entstehenden Methanols zu ermöglichen. Nach dieser Zeit wurde der Kolben offen gehalten und das Gewicht des entstandenen Harzes wurde gravimetrisch, und zwar in Minuten-Abständen, bestimmt. Als das Gewicht des Harzes etwa 28 g erreicht hatte, wurde dasselbe auf die mit einem Schutzüberzug zu versehenden Materialien auf Basis von Kohlenstoff aufgebracht:

Dazu wurden Kohlenstoff- und C/SiC-Streifen der schon oben genannten Maße in das Harz im Kolben eingebracht und es wurde dort 30 s lang gerührt, wonach die Streifen dem Kolben entnommen und getrocknet wurde.

In einem Ofen mit inerter Atmosphäre wurden die Substrat-Streifen mit den Sol/Gel-basierten Überzügen bei Temperaturen von 900°C in Silicium(oxi)carbid-Überzüge umgewandelt.

Die so hergestellten C/SiC-Überzüge wurden auf ihre Eigenschaften geprüft. Ergebnis:
Masseverlust der beschichteten Probekörper beim Oxidations-Versuch (Aufheizgeschwindigkeit 5 K/min auf 900°, 1 h Haltezeit, mit 5 K/min Abkühlung auf Umgebungstemperatur, im Luftstrom: 0,4 %.

### Beispiel 2:

17,65 g Dimethyldimethoxisilan (DMDMS, Aldrich, CP) und 22,35 g Tetramethylorthosilikat (TMOS, Aldrich, CP), (Molverhältnis 1:1) wurden in einem Kolben mit Magnetrührstäbchen und Schraubkappe eingebracht. Dann wurden 8 g Salzsäure 0,01 M zugegeben. Es wurden keine Verdünnungs- oder Lösungsmittel eingebracht. Der Kolben wurde leicht verschlossen und in einem 100°C-Wasserbad wurde die Mischung 10 min lang gerührt. Nach 10 min wurde der Verschluss allmählich geöffnet, und zwar ebenfalls innerhalb von 10 min, um ein langsames Abdampfen des bei der Reaktion gebildeten Methanols zu ermöglichen. Danach wurde der Kolben offen gelassen, und das Gewicht des Harzes wurde in Ein-Minuten-Abständen gravimetrisch bestimmt. Als das Harz ein Gewicht von etwa 28 g erreicht hatte, wurde es auf das mit dem Schutzüberzug zu versehende Material aufgebracht.

Dazu wurden Kohlenstoff- und C/SiC-Streifen der schon oben genannten Maße in das Harz im Kolben eingebracht und es wurde dort 30 s lang gerührt, wonach die Streifen dem Kolben entnommen und getrocknet wurden.

In einem Ofen mit inerter Atmosphäre wurden die Sol/Gel-basierten Überzüge bei Temperaturen von 900°C in SiC umgewandelt.

Der so hergestellte C/SiC-Überzug wurde auf seine Eigenschaften geprüft. Ergebnis:
Masseverlust bei Bedingungen wie im Beispiel 1 angegeben: 0,1 %.

### Beispiel 3:

Es wurde, wie in den vorhergehenden Beispielen beschrieben, verfahren, wobei folgende Harz-Ausgangsstoffe eingesetzt wurde:
34 g Methyltrimethoxysilan (MTMS, Aldrich, CP) und 6 g Dimethoxydimethylsilan (DMDMS, Aldrich, CP) wurden in einem Kolben mit Rührstäbchen und Schraubkappe eingebracht und es wurden 8,3 g HF 2,5 M zugegeben.

Die Herstellung des Harzes und des Überzuges auf dem Substrat wurden in gleicher Weise vorgenommen, wie schon im Beispiel 1 beschrieben.

Die so hergestellten C/SiC-Überzüge wurden auf ihre Eigenschaften geprüft. Ergebnis:
Masseverlust bei Bedingungen wie im Beispiel 1 angegeben: 0,1 %.

### Beispiel 4:

Es wurde in gleicher Weise wie in Beispiel 3 vorgegangen, nur mit dem Unterschied, dass das Sol/Gel- basierte Harz auf das 1,5-Fache mit Tetrahydrofuran (THF) verdünnt wurde, bevor dessen Auftrag auf das Substrat erfolgte. Die Herstellung und Fertigstellung des Überzugs erfolgte in gleicher Weise wie im Beispiel 1 beschrieben.

Der so hergestellte C/SiC-Überzüge wurden auf ihre Eigenschaften geprüft. Ergebnis:
Masseverlust bei Bedingungen wie im Beispiel 1 angegeben: 0,3 %.

### Beispiel 5:

13,6 g Methyltrimethoxysilan (MTMS, Aldrich, CP) und 12 g Dimethoxydimethylsilan (DMDMS, Aldrich, CP) wurden in einen Kolben mit Magnetrührstäbchen und Schraubkappe eingebracht. Es wurden 0,31 g B₂O₃ und 2,7 g H₂O zugegeben und kein sonstiger Katalysator. Es wurden weiters keinerlei Lösungs- oder Verdünnungsmittel eingesetzt. Der Kolben wurde nur leicht verschlossen und in ein Wasserbad mit 100°C gestellt, wobei 10 min lang gerührt wurde. Nach 10 min wurde die Verschlusskappe nach und nach geöffnet, und zwar ebenfalls wieder innerhalb von 10 min, um ein allmähliches Abdestillieren des bei der Reaktion entstehenden Methanols zu ermöglichen. Nach dieser Zeit wurde der Kolben offen gehalten, und das Gewicht des entstandenen Harzes wurde jeweils in Minuten-Abständen bestimmt. Als das Gewicht des Harzes etwa 17 g erreicht hatte, wurde es auf mit einem Schutzüberzug zu versehendes Substrat-Material aufgebracht, indem Kohlenstoff- und C/SiC-Streifen der oben genannten Maße in das Harz im Kolben eingebracht wurden, und es wurde dort 30 s lang gerührt, wonach die Streifen dem Kolben entnommen und getrocknet wurden.

In einem Ofen mit inerter Atmosphäre wurden die Sol/Gel-Harz-basierten Überzüge bei Temperaturen von 900°C in C/SiC-Überzüge umgewandelt.

Die so hergestellten C/SiC-Überzüge wurden auf ihre Eigenschaften überprüft. Ergebnis:
Masseverlust bei Bedingungen wie im Beispiel 1 angegeben: 0,3 %.

### Liste der Publikationen, Stand der Technik:

[1] Y. Haruvy and S.E. Webber, FAST SOL-GEL PREPARATION OF GLASSES, *US Patent,* 5,272,240 (1993) [*Patent Appl.* **SN/07/707,140** (1991)].
[2] Y. Haruvy and S.E. Webber, ELECTRIC FIELD CURING OF POLYMERS, *US Patent* 5,357,015 (1994) [*Patent Appl.* **SN/08/028,786** (1993)].
[3] European Patent 0482782B1, "Sol gel method of making silicon carbide and protecting a substrate", DeCastro, L.D. (1990).
[4] H. Prasse, H. Luech, H. Nickel, "Investigations for Improved Strength and Oxidation Resistance of Coat-Mix Mould Materials", NTIS TIB/B91-00456.
[5] M.A. Villegas, M. Aparicio, A. Duran, "Thick Sol-Gel Coatings Based on the B₂O₃ / SiO₂ System", ***J. Non-Cryst. Solids,* 218**, 146-150 (1997).
[6] M. Aparicio, A. Duran, "Infiltration of C/SiC Composites with Silica Sol-Gel Solutions", ***J*. *Mater. Res,* 14**, 4230-4238 (Part I); 4239-4245 (Part II) (1999).
[7] N. Takamura, K. Taguchi, T. Gunji, Y. Abe, "Preparation of Silicon Oxicarbide Ceramic Films by Pyrolysis of Polymethyl- and Polyvinylsilsesquioxanes", ***J. Sol-Gel Sci. Technol.,* 16*,*** 227-234 (1999).
[8] Sol-Gel Science: The Physics and Chemistry of Sol-Gel Processing, C. J. Brinker, G. W. Scherer (Editors), Academic Press, San-Diego, CA, USA (1990).
[9] Y. Haruvy, A. Heller and S.E. Webber, "Sol-Gel Preparation of Optically Clear Supported Thin-Film Glasses Embodying Laser Dyes - *Novel Fast Method",* Chap. 28 in *Proc. ACS Symp.,* **499**, "Supramolecular Architecture: Synthetic Control in Thin Films and Solids", T. Bein, Ed, ACS (1992).
[10] Y. Haruvy, I. Gilath, M. Maniewictz and N. Eisenberg, *Sol-Gel Replication of Micro-Optical Elements and Arrays, **Chem. Mater.**, special issue on Sol-Gel Derived Materials,* 9, 2604 (1997).
[11] Y. Haruvy et al., "ATOX Protective Coating for Space-Materials by the New Fast Sol-Gel Process", Proc. 2nd Int. Conf. on "Protection of Materials and Structures from the LEO Space Environment", Toronto, Canada, Feb. 24-25 (1994).
[12] Y. Haruvy, "Low Flux Atomic Oxygen: Can it be More Hazardous than High Flux ? A Risk Assessment Study", Proc. 3^{rd} Int. Conf. on "Protection of Materials and Structures from the LEO Space Environment", Toronto, Canada April 25-26 (1996).
[13] Y. Haruvy, "Space Environment Aspects of Fast Sol-Gel-Derived Glassy Materials and Coatings", ARCS Report OFZS-W-0013 (1999).

## Patentansprüche

1. Verfahren zur Herstellung einer Beschichtung auf Basis von Silicium(-oxi-)carbid auf einem Substrat, insbesondere aus der Gruppe Kohlenstoff, Kohlenstoff-Kohlenstoff-Verbundmaterialien und Kohlenstoff-Siliciumcarbid-Verbundmaterialien, wobei eine Lösung von mindestens einem organische Gruppen aufweisenden Silan und Wasser in Gegenwart eines sauren oder basischen Katalysators der Hydrolyse und Polykondensation unterworfen wird und nach zumindest teilweiser Entfernung der dabei frei werdenden flüchtigen Verbindungen, insbesondere Alkohol(e) oder Phenole, das erhaltene Sol und/oder Gel, gegebenenfalls in mehreren Schichten, auf das Substrat aufgebracht wird und nach einer Trocknung das erhaltene, mit der Beschichtung versehene Substrat, gegebenenfalls mehrstufig, bis auf Temperaturen von über 1300°C erhitzt wird,
**dadurch gekennzeichnet,**
**dass** - für den Erhalt einer gegen oxidativen Abbau resistenten SiC-Keramik-Beschichtung - ein (Alkyl- und/oder Aryl-)Alkoxysilan-Monomer oder aber ein Gemisch von mindestens zwei (Alkyl- und/oder Aryl-)Alkoxysilan-Monomeren, stöchiometrisch insgesamt entsprechend der allgemeinen Formel
RₓSi(OR')₄₋ₓ , (I)
worin
Rund R' unabhängig voneinander Alkyl mit 1 bis 5, vorzugsweise 1 bis 3, Kohlenstoffatomen und/oder Aryl, insbesondere Phenyl, und
x eine beliebige Zahl von 1,0 bis 4,0
bedeuten, unter Ausschluss eines Zusatzes auf Basis eines kohlenstoffhältigen Materials, mit Wasser in einem Wasser-zu-Silan-Molverhältnis von 0,3 bis 3,0, vorzugsweise von 0,6 bis 1,8, zu einem entsprechenden flüssigen bzw. fließfähigen Sol-Harz umgesetzt wird, und dass die nach teilweisem Entfernen flüchtiger Komponenten, Auftragen auf das Substrat und Trocknen erhaltene, im wesentlichen glasartige Auftragsschicht durch Erhitzen auf Temperaturen von bis zu 1850°C, vorzugsweise bis maximal 1600°C, in die erwünschte keramikartige SiC-Beschichtung übergeführt bzw. umgewandelt wird.

2. Verfahren nach Anspruch 1, **dadurch gekennzeichnet, dass** ein (Alkyl- und/oder Aryl-)Alkoxysilan-Monomer bzw. eine Mischung von mindestens zwei (Alkyl- und/oder Aryl-)Alkoxysilan-Monomeren eingesetzt wird, in welchem bzw. in welcher die mittlere Anzahl der organischen Reste R pro (Alkyl- und/oder Aryl-)Alkoxysilan-Monomer(e) zumindest 0,7 und maximal 2, vorzugsweise von 0,7 bis 1,2, beträgt.

3. Verfahren nach Anspruch 1 oder 2, **dadurch gekennzeichnet, dass** das Sol/Gel-basierte Harz mittels eines "schnellen" Sol/Gel-Prozesses, vorzugsweise bei Temperaturen von 60 bis 140°C, insbesondere von 80 bis 120°C, gegebenenfalls bei Unterdruck, hergestellt wird.

4. Verfahren nach einem der Ansprüche 1 bis 3, **dadurch gekennzeichnet, dass** in das Sol/Gel basierte Harz Sol/Gel-Precurser auf Basis von organischen Verbindungen mindestens eines Metalles und/oder Halbmetalles, ausgenommen Silicium, eingebaut werden, wobei an das (Halb-)Metallatom mindestens ein organischer Rest aus der Gruppe: Alkyl, Aryl, Alkoxy, Aryloxy, Arylalkoxy und Alkylaryloxy, und/oder zumindest eine OH-Gruppe gebunden ist und die genannte Zahl der Reste bzw. Gruppen jeweils der Oxidationszahl des (Halb-)Metallatoms entspricht, und wobei als Precurser besonders bevorzugt Borsäure bzw. Borsäure-Anhydrid und/oder Aluminiumhydroxid und/oder eine titan-organische Verbindung eingesetzt wird.

5. Verfahren nach einem der Ansprüche 1 bis 4, **dadurch gekennzeichnet, dass** die Sol/Gel-basierten Harze in Form einer viskosen Flüssigkeit, als viskoses Sol oder als teilweise geliertes Harz, vorzugsweise mit einer Viskosität im Bereich von 100 bis 1000 mPa.s, vorliegen, bevor sie auf die mit ihnen zu schützenden Materialien bzw. Substrate aufgetragen werden.

6. Verfahren nach einem der Ansprüche 1 bis 5, **dadurch gekennzeichnet, dass** die Sol/Gel- basierten Harze nach Abdampfen einer jeweils vorgesehenen Menge des (der) bei der Reaktion der Silane mit Wasser jeweils gebildeten Alkohols (Alkohole) und/oder Phenols (Phenole) mittels zumindest eines Lösungsmittels, wie insbesondere THF, Aceton und/oder Methanol, verdünnt werden, um ihnen die für die jeweils gewählte Art der Aufbringung auf die zu schützenden Materialien bzw. Substrate geeignete Viskosität zu verleihen.

7. Verfahren nach einem der Ansprüche 1 bis 6, **dadurch gekennzeichnet, dass** die Sol/Gel-basierten Harze auf die zu schützenden Materialien bzw. Substrate durch Aufwalzen, Bürsten, Aufgießen, Tauchen, Sprühen, Vakuum-Imprägnieren od. dgl. aufgebracht werden.

8. Verfahren nach einem der Ansprüche 1 bis 7, **dadurch gekennzeichnet, dass** die Sol/Gel-basierten Harze nach ihrem Auftrag auf die zu schützenden Materialien bzw. Substrate, gegebenenfalls bei Unterdruck, bei Umgebungstemperatur oder erhöhter Temperatur, vorzugsweise bei Temperaturen zwischen 70 und 100°C, aushärten gelassen werden.

9. Verfahren nach einem der Ansprüche 1 bis 8, **dadurch gekennzeichnet, dass** das Sol/Gel-basierte Harz nach dessen Auftrag zumindest einem Pyrolyseschritt innerhalb eines Temperaturbereiches von 400 bis 550°C unterworfen wird.

10. Verfahren nach einem der Ansprüche 1 bis 9, **dadurch gekennzeichnet, dass** der Aushärtungs- und/oder der Pyrolyseschritt mittels direkter Beheizung, Konvektions-, Strahlungs-, Mikrowellen- oder Induktiv-Heizung vorgenommen wird.

11. Verfahren nach einem der Ansprüche 1 bis 10, **dadurch gekennzeichnet, dass** das mit dem gemäß einem der Ansprüche 8 bis 10 ausgehärteten und pyrolysierten ÜberzugsMaterial versehene Substrat einem Hochtemperatur-Erhitzungsprozess bei Temperaturen von bis zu 1850°C, vorzugsweise bis maximal 1600°C, unterworfen wird, wobei der Überzug in ein keramisches Material umgewandelt wird, dessen Hauptkomponente durch Silicium(oxi)carbid gebildet ist.

12. Verfahren nach Anspruch 11, **dadurch gekennzeichnet, dass** der Hochtemperatur-Erhitzungsprozess bei erhöhtem Druck, vorzugsweise bei einem Druck von maximal 50 bar, durchgeführt wird.

13. Verfahren nach einem der Ansprüche 1 bis 11, **dadurch gekennzeichnet, dass** zumindest der Hochtemperatur-Erhitzungsprozess teilweise unter Vakuum und/oder in inerter Atmosphäre oder aber in einer teil-oxidativen oder teil-reduktiven Atmosphäre durchgeführt wird.

14. Verwendung von Silanen bzw. Silanmonomeren der allgemeinen Formel I für die Herstellung von gegen oxidativen Abbau resistenten Überzügen bzw. Beschichtungen von Gegenständen bzw. Substraten aus der Gruppe Kohlenstoff, Kohlenstoff-Kohlenstoff-Verbundmaterialien und Kohlenstoff-Siliciumcarbid-Verbundmaterialien mit der Maßgabe, dass mindestens ein Silan der allgemeinen Formel I mit Wasser in einem Wasser-zu-Silan-Molverhältnis von 0,3 bis 3,0, vorzugsweise von 0,6 bis 1,8, im Rahmen eines "schnellen" Sol/Gel-Prozesses zu einem entsprechenden flüssigen bzw. fließfähigen Sol/Gel-basierten Harz umgesetzt wird, und dass die nach teilweisem Entfernen flüchtiger Komponenten, Auftragen auf das Substrat und Trocknen erhaltene, im wesentlichen glasartige, Auftragsschicht durch Erhitzen auf Temperaturen von bis zu 1850°C, vorzugsweise von bis zu 1600°C, in die erwünschte keramikartige SiC-Beschichtung übergeführt bzw. umgewandelt ist.

15. Verwendung nach Anspruch 14 mit der Maßgabe, dass die SiC-Beschichtung auf dem genannten Substrat nach einem Verfahren gemäß einem der Ansprüche 1 bis 13 aufgebracht ist.

## Claims

1. Process for preparation of a coating on the basis of silicon(-oxi)carbide on a substrate, particularly from the group of carbon, composite materials of carbon-carbon and composite materials of carbon-silicon carbide, wherein a solution of at least one silane, comprising an organic group, and water in the presence of an acid or basic catalyst is subjected to hydrolysis and to polycondensation, and the obtained sol and/or gel, after at least partial removal of volatile compounds thereby released, particularly alcohol(s) or phenols, is applied to the substrate, optionally in a plurality of layers, and the obtained substrate including the coating, after drying, is heated up to temperatures of more than 1300°C,
**characterised in**
**that**, for obtaining an SiC ceramic coating resistant against decomposition by oxidation, an (alkyl and/or aryl)alkoxysilane monomer or a combination of at least two (alkyl and/or aryl)alkoxysilane monomers is stoichiometrically reacted, in total according to the general formula
RₓSi(OR')₄₋ₓ (I)
wherein
R and R' independently from one another mean an alkyl having 1 to 5, preferably 1 to 3, carbon atoms and/or aryl, particularly phenyl, and
x is any number from 1.0 to 4.0
under exclusion of an additive on the basis of a carbon containing material, with water in a molar ration of water to silane of 0.3 to 3.0, preferably 0.6 to 1.8, to a corresponding liquid or flowable sol resin, and that the applied substantially glassy coating, obtained after partial removal of volatile components, application onto the substrate and drying, is transferred or converted into the desired ceramic-like SiC coating by heating to temperatures of up to 1850°C, preferably up to 1600°C in maximum.

2. Process according to claim 1, **characterised in that** an (alkyl and/or aryl)alkoxysilane monomer or a combination of at least two (alkyl and/or aryl)alkoxysilane monomers is used, wherein the mean number of organic residues R per (alkyl and/or aryl)alkoxysilane monomer(s) amounts to at least to 0.7 and 2 in maximum, preferably from 0.7 to 1.2.

3. Process according to claim 1 or 2, **characterised in that** the resin on the basis of a sol/gel is produced by means of a "rapid" sol/gel procedure, preferably at a temperature of 60 to 140°C, particularly from 80 to 120°C, optionally at an underpressure.

4. Process according to any of claims 1 to 3, **characterised in that** sol/gel precursors on the basis of organic compounds of at least one metal and/or metalloid, with exception of silicon, are incorporated into said resin based on a sol/gel, wherein at least one organic residue of the group of: alkyl, aryl, alkoxy, aryloxy, arylalkoxy and alkylaryloxy and/or at least one OH group is bonded to the (metalloid)metal atom and said number of residues or groups corresponds each to the oxidation number of the (metalloid)metal atom, and wherein in a particularly preferred manner boric acid or boric anhydride and/or a titan organic compound is used as a precursor.

5. Process according to any of claims 1 to 4, **characterised in that** the resins on the basis of a sol/gel exist in the form of a viscous liquid, of a viscous sol or as a partially gel forming resin, preferably having a viscosity in the range of 100 to 1000 mPa.s, prior to being applied onto the materials or substrates to be protected by them.

6. Process according to any of claims 1 to 5, **characterised in that** the resins on the basis of a sol/gel, after evaporation of a respectively provided quantity of the alcohol(s) and/or phenol(s), formed respectively when reacting the silanes with water, are diluted by means of at least one solvent, such as in particular THF, acetone and/or methanol, in order to confer to them an appropriate viscosity for the respectively desired type of application onto the materials or substrates to be protected.

7. Process according to any of claims 1 to 6, **characterised in that** the resins on the basis of a sol/gel are applied onto the materials or substrates to be protected by rolling on, brushing, casting, dipping, spraying, vacuum impregnation or the like.

8. Process according to any of claims 1 to 7, **characterised in that** the resins on the basis of a sol/gel, after their application onto the materials or substrates to be protected, are permitted to cure, optionally at an underpressure, either at ambient temperature or at an elevated temperature, preferably at a temperature between 70 and 100°C.

9. Process according to any of claims 1 to 8, **characterised in that** the resin on the basis of a sol/gel, after its application, is subjected to at least one pyrolytic step within a range of temperature of 400 to 550°C.

10. Process according to any of claims 1 to 9, **characterised in that** the curing and/or pyrolytic step is carried out by means of direct heating, convection heating, radiation heating, microwave heating or inductive heating.

11. Process according to any of claims 1 to 10, **characterised in that** the substrate, provided with the coating material cured and pyrolised according to any of claims 8 to 10, is subjected to a high-temperature heating procedure at a temperature of up to 1850°C, preferably up to 1600°C in maximum, whereby the coating is converted into a ceramic material, the principal component of which being formed by silicone(-oxi)carbide.

12. Process according to claim 11, **characterised in that** said high-temperature heating procedure is carried out at an elevated pressure, preferably at a pressure of 50 bar in maximum.

13. Process according to any of claims 1 to 11, **characterised in that** at least said high-temperature heating procedure is partially carried out under a vacuum and/or in an inert atmosphere or in a partially oxidising or partially reducing atmosphere.

14. The use of silanes or silane monomers of the general formula I for the preparation of coverings or coatings resistant against decomposition by oxidation of objects or substrates from the group of carbon, composite materials of carbon-carbon and composite materials of carbon-silicon carbide, with the proviso that at least one silane of the general formula I is reacted in the framework of a "rapid" sol/gel procedure with water in a molar ration of water to silane of 0.3 to 3.0, preferably 0.6 to 1.8, to a corresponding liquid or flowable resin based on a sol/gel. and that the applied substantially glassy coating, obtained after partial removal of volatile components, application onto the substrate and drying, is transferred or converted into the desired ceramic-like SiC coating by heating to a temperature of up to 1850°C, preferably of up to 1600°C.

15. The use according to claim 14 with the proviso that the SiC coating on said substrate is applied in accordance with a process according to any of claims 1 to 13.

## Revendications

1. Procédé pour la préparation d'une couche à la base d'(e) (oxi)carbure de silicium sur un substrat, particulièrement de la groupe de carbone, des matériaux composites de carbone/carbone et des matériaux composites de carbone et de carbure de silicium, dans lequel on soumet une solution d'au moins un silane, qui comprend des groupes organiques, et de l'eau à l'hydrolyse et à une polycondensation en présence d'un catalyseur acide ou basique, et après une élimination au moins partielle des combinaisons volatiles y libérées, particulièrement de/des (l')alcool(s) ou des phénols, on applique le sol et/ou gel obtenu, le cas échéant en plusieurs couches, au substrat, et après le séchage on chauffe le substrat obtenu, pourvu de la couche, le cas échéant, en plusieurs étages, aux température supérieures de 1300°C,
**caractérisé en ce,**
**que**, pour l'obtention d'une couche céramique de SiC résistante à la dégradation par oxydation, on transforme d'une façon stoechiométrique un (alkyle et/ou aryle) monomère d'alcoxyde de silane ou un mélange d'au moins deux (alkyle et/ou aryle) monomères d'alcoxyde de silane en total selon la formule générale
RₓSi(OR')₄₋ₓ (I)
dans laquelle
R et R' signifient indépendamment l'un de l'autre un alkyle avec 1 à 5, préférablement 1 à 3 atomes de carbone et/ou aryle, particulièrement phényle, et
x une nombre quelconque de 1,0 à 4,0
en excluant un additif à la base d'un matériau contenant du carbone, avec de l'eau dans un rapport molaire de l'eau à silane de 0,3 à 3,0, préférablement de 0,6 à 1,8, à un résine en sol liquide ou coulant correspondant, et qu'après élimination partielle des composants volatils et après l'application au substrat et le séchage, on transforme ou convertit la couche d'application obtenue, sensiblement vitreuse par un chauffage à une température de jusqu'à 1850°C, de préférence jusqu'à 1600° en maximum, en la couche désirée de type céramique de SiC.

2. Procédé selon la revendication 1, **caractérisé en ce**, **qu**'un (alkyle et/ou aryle) monomère d'alcoxyde de silane ou un mélange d'au moins deux (alkyle et/ou aryle) monomères d'alcoxyde de silane est utilisé, dans lequel le nombre moyen des résidus organique R par (alkyle et/ou aryle) monomère(s) d'alcoxyde de silane se monte à au moins 0,7 et 2 en maximum, préférablement de 0,7 à 1,2.

3. Procédé selon la revendication 1 ou 2, **caractérisé en ce, que** le résine à base de sol/gel est préparé au moyens d'une procédure "rapide" de sol/gel, préférablement aux températures de 60 à 140°C, particulièrement de 80 à 120°C, le cas échéant sous une dépression.

4. Procédé selon une quelconque des revendications 1 à 3, **caractérisé en ce, que** l'on insère dans le résine à base de sol/gel des précurseurs de sol/gel à la base des combinaisons organiques d'au moins un métal et/ou métalloïde, sauf le silicium, au moins un résidu organique de la groupe d'alkyle, d'aryle, d'alkoxy, d'aryloxy, d'arylalkoxy et d'alkylaryloxy, et/ou au moins une groupe OH étant combiné au atome de métal (métalloïde), et dans lequel ledit nombre des résidus ou groupes correspond chacun au nombre d'oxydation de l'atome de métal (métalloïde), et dans lequel, d'une manière particulièrement préférée, on utilise l'acide borique ou l'anhydride de l'acide borique et/ou l'hydroxyde d'aluminium et/ou une combinaison organique de titane.

5. Procédé selon une quelconque des revendications 1 à 4, **caractérisé en ce, que** les résines à base de sol/gel existent en forme d'un liquide visqueux, d'un sol visqueux ou de résine partiellement gélifié, de préférence avec une viscosité dans le domaine de 100 à 1000 mPa.s avant d'être appliqués aux matériaux ou substrats à être protégés par ceux-ci.

6. Procédé selon une quelconque des revendications 1 à 5, **caractérisé en ce, que** les résines à base de sol/gel, après évaporation d'une quantité respectivement prévue d'alcool (des alcools) et/ou phénol(s) formé(s) lors de la réaction des silanes avec de l'eau, sont dilués au moyens d'au moins un solvant, comme particulièrement le THF, l'acétone et/ou le méthanol, pour les conférer la viscosité appropriée pour le type respectivement choisi de l'application sur les matériaux ou substrats à protéger.

7. Procédé selon une quelconque des revendications 1 à 6, **caractérisé en ce, que** les résines à base de sol/gel sont appliqués aux matériaux ou substrats à protéger par laminage au rouleau, par brosser, par coulées, par immersion, par pulvérisation, par imprégnation à vide ou pareil.

8. Procédé selon une quelconque des revendications 1 à 7, **caractérisé en ce, que** les résines à base de sol/gel, après son application sur les matériaux ou substrats à protéger, sont permis à durcir, le cas échéant sous une dépression, avec une température ambiante ou une température élevée, préférablement à une température entre 70 et 100°C.

9. Procédé selon une quelconque des revendications 1 à 8, **caractérisé en ce, que** le résine à base de sol/gel, après son application, est soumis d'au moins un pas de pyrolyse au dedans d'un domaine de température de 400 à 550°C.

10. Procédé selon une quelconque des revendications 1 à 9, **caractérisé en ce, que** le pas de durcissement et/ou de pyrolyse est effectué au moyens d'un chauffage directe, d'un chauffage à convection, à rayonnement, à micro-ondes ou à induction.

11. Procédé selon une quelconque des revendications 1 à 10, **caractérisé en ce, que** le substrat, pourvu du matériau de couche durci et pyrolysé selon une quelconque des revendications 8 à 10, est soumis d'une procédure de chauffage à haute température, à une température de jusqu'à 1850°C, préférablement 1600°C en maximum, par laquelle la couche est transformée en un matériau céramique, dont le composant principal est formé par un (oxi)carbure de silicium.

12. Procédé selon la revendication 11, **caractérisé en ce, que** la procédure de chauffage à haute température est réalisée sous une pression élevée, de préférence sous une pression de 50 bar en maximum.

13. Procédé selon une quelconque des revendications 1 à 11, **caractérisé en ce**, **qu**'au moins la procédure de chauffage à haute température est partiellement réalisée sous vacuum et/ou dans un atmosphère inerte ou bien dans un atmosphère partiellement oxidatif ou partiellement réductif.

14. Utilisation de silanes ou de monomères de silane de la formule générale 1 pour la préparation des couches résistantes à la dégradation par oxydation ou des couches des objets ou substrats de la groupe de carbone, des matériaux composés de carbone/carbone et des matériaux composés de carbone et de carbure de silicium à condition, qu'au moins un silane de la formule générale I est transformé avec de l'eau dans un rapport molaire de l'eau à silane de 0,3 à 3,0, préférablement de 0,6 à 1,8, dans le cadre d'une procédure "rapide" de sol/gel à former un résine basé à un sol/gel liquide ou coulant correspondant, et que la couche appliquée obtenue après une élimination partielle des combinaisons volatiles, après l'application sur le substrat et séchage, qui est sensiblement vitreuse, est transformée ou converti en la couche désirée de type céramique de SiC par un chauffage aux températures de jusqu'à 1850°C, de préférence de jusqu'à 1600°C.

15. Utilisation selon la revendication 14 à condition, que la couche de SiC sur ledit substrat est appliquée selon un procédé selon une quelconque des revendications 1 à 13.
